# EUROPEAN PATENT APPLICATION

(11) **EP 1 591 303 A2**
(43) Date of publication of application: **02.11.2005**
(21) Application number: 05008782.4
(22) Date of filing: 21.04.2005
(51) Int. Cl.: B60N 2/235

(54) **Rotating device and seat reclining device for vehicle**

(30) Priority: 26.04.2004 JP 2004130363
(71) Applicant: AISIN SEIKI KABUSHIKI KAISHA, Kariya-shi, Aichi-ken 448-8650 (JP)
(72) Inventor: Kojima, Yasuhiro c/o Intellectual Property Dept., Kariya-shi Aichi-ken 448-8650 (JP)
(74) Representative: TBK-Patent

(57) **Abstract**

A rotation device includes a first frame (11, 21), a second frame (12, 24) connected to the first frame to be rotatable within a predetermined angle, and a spiral spring (15, 26) including a first end and a second end, the first end of the spiral spring being configured to be engaged with the first frame, the second end of the spiral spring being configured to be engaged with the second frame. The spiral spring is formed in such a way that mutually opposing sides of a wire rod (W1, W2) do not make contact with each other when the second frame rotates within the predetermined angle.

## Description

### FIELD OF THE INVENTION

The present invention relates to a rotating device and a seat reclining device for a vehicle.

### BACKGROUND

A known seat reclining device serving as a rotating device, and described in JP2000-245560, includes a seat cushion frame (110), a seatback frame (120) connected to the seat cushion frame rotatably within a predetermined range, and a spiral spring (130). A first end (133) at an external periphery side of the spiral spring is engaged with the seat cushion frame (i.e., an engagement pin 111), and a second end (132) at an internal periphery side of the spiral spring is engaged with the seatback frame (i.e., a holding means 140), and thus the spiral spring is provided between the seat cushion frame and the seatback frame. The seatback frame is biased so as to rotate in a front direction by means of the spiral spring.

With the construction of the known seat reclining device described in JP2000-245560, when the spiral spring is installed in the seat reclining device, mutually opposing surfaces of a wire rod that forms the spiral spring make contact with each other. This contact is made because, when the spiral spring is installed into the seat reclining device, a bias is generated in response to elastic deformation. Thus, when the seatback frame is rotated relative to the seat cushion frame, for example, by virtue of the spiral spring being convoluted, the dimensions of an area of contact between the mutually opposing surfaces is increased, and thus pressure applied between the mutually opposing surfaces is also increased. Alternatively, by returning the spiral spring to the initial state, the dimensions of the area of contact between the mutually opposing surfaces is decreased, and thus pressure applied between the mutually opposing surfaces is also decreased. Accordingly, frictional force (i.e., frictional resistance) generated between the mutually opposing surfaces of the spiral spring when the spiral spring is returning to the initial state becomes less intense than at a time when the spiral spring is being convoluted. In these circumstances, it goes without saying that, in accordance with the rotational direction of the seatback frame, frictional force is applied in different directions, depending on whether the spiral spring is returning to the initial state, or whether the spiral spring is being convoluted.

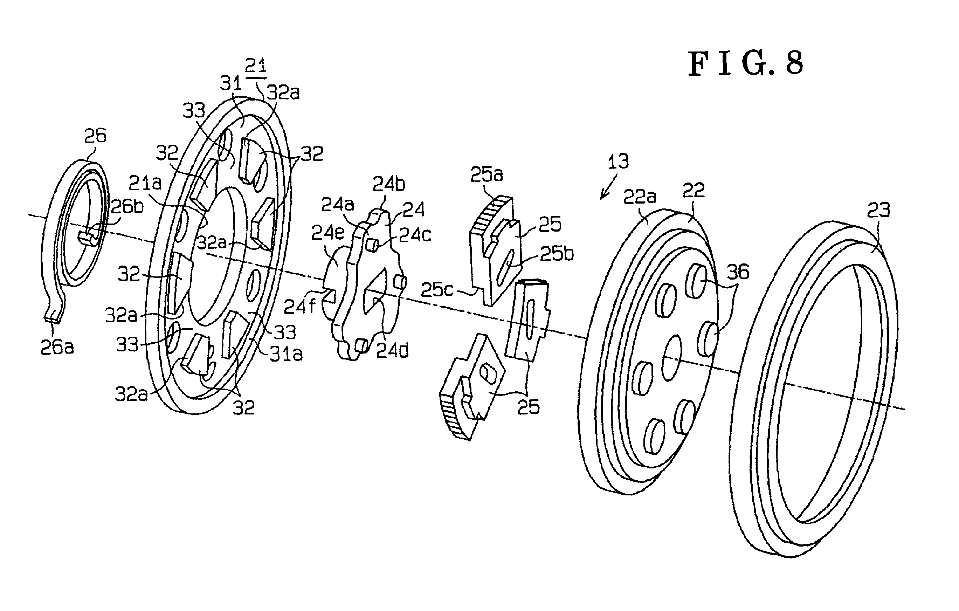

A dotted line shown in a graph in Fig. 8 illustrates a transition of an angle corresponding to convoluting movement of the spiral spring, or to a return of the spiral spring, and a torque change generated in accordance with the transition of the angle. As shown in Fig. 8, between the time that the spiral spring is returning to the initial state and the time that the spiral spring is being convoluted the spiral spring generates significant hysteresis during the torque change, deriving from the frictional force. In other words, torque increases when the spiral spring is being convoluted, and decreases when the spiral spring is returning to the initial state. Accordingly, it becomes a difficult process to determine a predetermined torque in accordance with an angle of the seatback frame. Further, in order to rotate the seatback frame in a rearward direction, an enormous operational force is required because, in addition to the biasing force of the spiral spring, the seatback frame has to be rotated against the frictional force.

A known seat reclining device for a vehicle described in JP2003-148533 has been elaborated in order to reduce the impact of frictional force generated between mutually opposing surfaces of the spiral spring. With a spiral spring (430) described in JP2003-148533, the dimensions of an area of contact between mutually opposing surfaces can be reduced by causing the mutually opposing surfaces to make contact with each other linearly, or as a dotted line by devising a configuration of the wire rod in cross section.

However, because a wire rod having a highly specific configuration in cross section is used as the spiral spring, manufacturing costs are significantly increased because of difficulties in forming the configuration and because of a substantial reduction in degree of freedom for design. Further, because, in any event the mutually opposing surfaces of the wire rod forming the spiral spring still make contact with each other, it is anticipated that generation of hysteresis caused by the influence of frictional force cannot be adequately controlled.

A need thus exists for a rotational device and a seat reclining device for a vehicle that inhibits hysteresis of a torque change in accordance with an overall rotation thereof. The present invention has been made in view of the above circumstances and provides such a rotational device and seat reclining device.

### SUMMARY OF THE INVENTION

In light of the foregoing, the present invention provides a rotation device, which includes a first frame, a second frame connected to the first frame to be rotatable within a predetermined angle, and a spiral spring including a first end and a second end, and made from a wire rod, the first end of the spiral spring being configured to be engaged with the first frame, the second end of the spiral spring being configured to be engaged with the second frame. The spiral spring is formed in such a way that mutually opposing sides of the wire rod do not make contact with each other when the second frame rotates within the predetermined angle.

According to another aspect of the present invention, a seat reclining device for a vehicle includes a lower arm fixed to a seat cushion frame, an upper arm fixed to a seatback frame relatively rotatably connected to the lower arm, a cam connected to either one of the lower arm or the upper arm to be rotatable within a predetermined angle, the cam for switching a rotation restriction state and a rotation allowing state of the upper arm relative to the lower arm, a spiral spring having a first end and a second end, either the first end or the second end of the spiral spring being engaged with either the lower arm or the upper arm, the second end of the spiral spring being engaged with the cam, for biasing the cam to achieve the rotation restriction state, and an operation portion connected to the cam to be integrally rotatable for transmitting operational force to the cam to achieve the rotation allowing state. The spiral spring is formed in such a way that mutually opposing sides of a wire rod do not make contact with each other when the cam rotates within the predetermined angle.

According to further aspect of the present invention, a seat reclining device for a vehicle includes a seat cushion frame, a seatback frame connected to the seat cushion frame to be rotatable within a predetermined angle, and a spiral spring including a first end and a second end, the first end of the spiral spring being engaged with the seat cushion frame, the second end of the spiral spring being engaged with the seatback frame. The spiral spring is formed in such a way that mutually opposing sides of a wire rod do not make contact with each other when the seatback frame rotates within the predetermined angle.

According to the present invention, mutually opposing sides of the wire rod for forming the spiral spring do not make contact with each other over the entire circumference when the second frame rotates within the predetermined angle. Thus, frictional force is not generated between the mutually opposing sides of the spiral spring over the entire rotational operation of the second frame relative to the first frame. Accordingly, overall hysteresis during the torque change in conjunction with the rotation of the second frame can be inhibited.

According to the present invention, the mutually opposing sides of the wire rod for forming the spiral spring do not make contact with each other over the entire circumference when the cam rotates within the predetermined angle. Thus, for example, when operational force is transmitted to the cam by means of the operational portion against the spiral spring to achieve the rotation allowing state, frictional force is not generated between the mutually opposing sides of the spiral spring over the entire rotational operation of the cam relative to one of the lower arm or the upper arm. Likewise, when the rotation restriction state is achieved by biasing the cam by means of the spiral spring in conjunction with the release of the operational force, frictional force is not generated between the sides of the spiral spring over the entire rotational operation of the cam relative to either the lower arm or the upper arm. Thus, overall hysteresis during the torque change in conjunction with the rotation of the cam can be inhibited. In particular, the excessive operation to be transmitted to the cam via the operational portion in order to achieve the rotation allowing state and the inadequate holding force for maintaining the rotation restriction state can be avoided.

According to the present invention, mutually opposing sides of the wire rod for forming the spiral spring do not make contact with each other over the entire circumference when the seatback frame rotates within the predetermined angle. Thus, frictional force is not generated between the mutually opposing sides of the spiral spring over the entire rotational operation of the seatback frame relative to the seat cushion frame. Accordingly, overall hysteresis during the torque change in conjunction with the rotation of the seatback frame can be inhibited.

### BRIEF DESCRIPTION OF THE DRAWINGS

The foregoing and additional features and characteristics of the present invention will become more apparent from the following detailed description considered with reference to the accompanying drawings, wherein:

Fig. 1 is a side view of a frame portion of a seat reclining device, serving as a rotational device, for a vehicle installed in a vehicle such as an automobile according to an embodiment of the present invention.

Fig. 2 is a cross-sectional view taken on line II-II in Fig. 1 according to the embodiment of the present invention.

Fig. 3 is a perspective view showing the frame portion of the seat reclining device for the vehicle according to the embodiment of the present invention.

Fig. 4 is a view showing a state of release of a spiral spring according to the embodiment of the present invention.

Fig. 5 is a view showing an installed state of the spiral spring according to the embodiment of the present invention.

Fig. 6 is a lateral view of a lock mechanism according to the embodiment of the present invention.

Fig. 7 is a cross-sectional view taken on line VII-VII in Fig. 6 according to the embodiment of the present invention.

Fig. 8 is a perspective view of the lock mechanism according to the embodiment of the present invention.

Fig. 9 is a view showing a state of release of a spiral spring according to the embodiment of the present invention.

Fig. 10 is a view showing an assembled state of the spiral spring according to the embodiment of the present invention.

Fig. 11 is a graph showing a relationship between an angle and a torque.

### DETAILED DESCRIPTION

One embodiment of the present invention will be explained with reference to illustrations of drawing figures as follows.

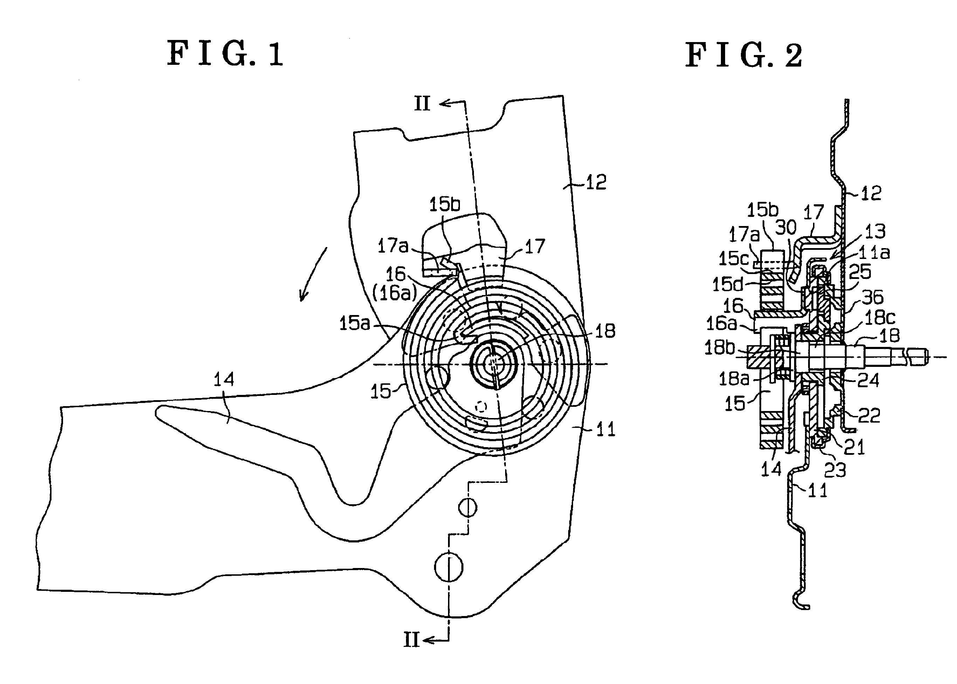

Frame portions shown in Figs. 1-3 are arranged as a pair in a width direction of a vehicle seat, and Figs. 1-3 show the frame portion provided on the left side as seen when one faces the front of the vehicle.

As shown in Figs. 1-3, the seat reclining device for the vehicle includes a seat cushion frame 11 serving as a first frame, a seatback frame 12 serving as a second frame, a lock mechanism 13, an operation lever 14 serving as an operational portion, and a spiral spring 15. The seat cushion frame 11 serves as a frame of a seat cushion. The seatback frame 12 serves as a frame of a seatback.

The seatback frame 12 is connected to a rear end portion of the seat cushion frame 11 so as to be rotatable within a predetermined angle range via a lock mechanism 13. The range of the angle is defined by positional relationships with surrounding members, or the like, for example, when the seatback frame 12 and the seat cushion frame 11 are installed in a vehicle. The lock mechanism 13 is for switching a state at which a rotation of the seatback frame 12 relative to the seat cushion frame 11 is restricted, and a state at which a rotation of the seatback frame 12 relative to the seat cushion frame 11 is allowed.

In other words, the lock mechanism 13 basically maintains a rotation restriction state of the seatback frame 12 relative to the seat cushion frame 11. On the other hand, a fitting bore 14a is formed on the operation lever 14. A first fitting portion 18b of a rotational shaft 18 fits into the fitting bore 14a, and a flange 18a provided at the rotational shaft 18 prevents the first fitting portion 18b from being pulled out. The lock mechanism 13 is engaged with a second fitting portion 18c formed at a tip side of the first fitting portion 18b by means of penetration of the rotational shaft 18 into a central portion of the lock mechanism 13. When the rotational shaft 18 rotates by virtue of an operation of the operation lever 14, the lock mechanism 13 engaged with the rotational shaft 18, by transmitting an operational force of the operation lever 14, switches a state of the seatback frame 12 to a state that allows a rotation of the seatback frame 12 relative to the seat cushion frame 11.

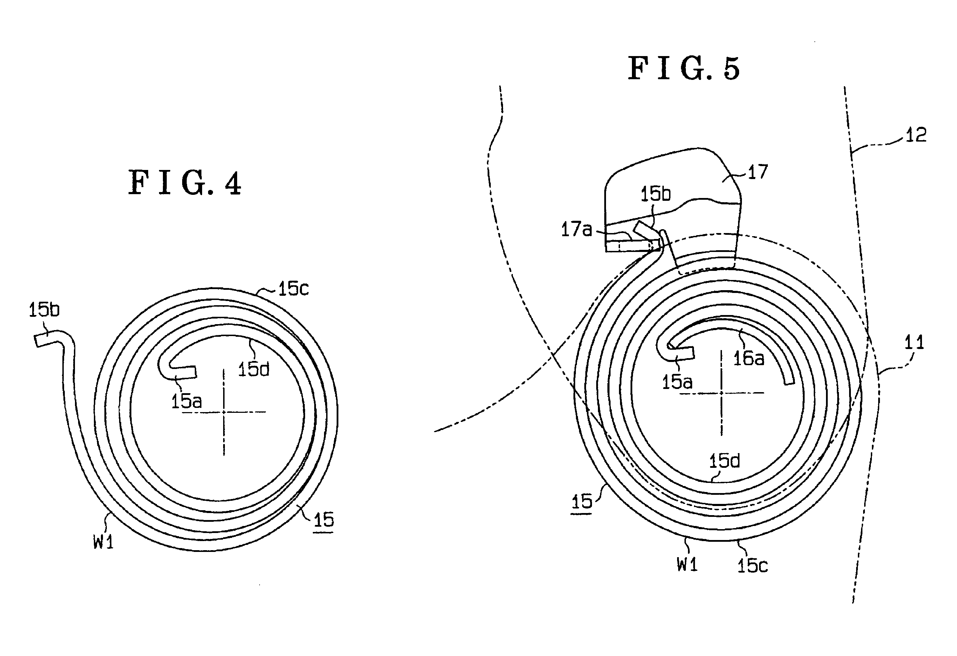

The spiral spring 15 is formed by spirally winding a wire rod W1 (shown in Figs. 4-5) having a predetermined cross-section which is approximately rectangular. The spiral spring 15 includes an inner engagement end portion 15a serving as a first end formed by bending a tip at an inner periphery side, and a outer engagement end portion 15b serving as a second end formed by bending a tip at the outer periphery side. In order to assemble the spiral spring 15, the inner engagement end portion 15a is engaged with the seat cushion frame 11, and the outer engagement end portion 15b is engaged with the seatback frame 12.

In other words, a lower bracket 16 extending outward in a width direction of the vehicle seat over the rotational shaft 18 is secured to the seat cushion frame 11. An engagement piece 16a is formed on the lower bracket 16. On the other hand, an upper bracket 17 extending outwardly in a width direction of the vehicle seat is secured to the seatback frame 12 above the lower bracket 16. An engagement piece 17a is formed on the upper bracket 17. The spiral spring 15 is wound clockwise in Figs. 4-5, from the inner periphery side to the outer periphery side. In order to assemble the spiral spring 15, the inner engagement end portion 15a is engaged with the engagement piece 16a, and the outer engagement end portion 15b is engaged with the engagement piece 17a. In other words, an inner periphery side of the spiral spring 15 is engaged with the seat cushion frame 11 (i.e., the engagement piece 16) via the inner engagement end portion 15a which is bent at a position deviating from the center of the spiral spring 15. The spiral spring 15 biases the seatback frame 12 to rotate, counterclockwise in Figs. 4-5, that is, in a forward direction, relative to the seat cushion frame 11.

Each surface at an outer periphery side and an inner periphery side of the wire rod W1 which is configured so as to form the spiral spring 15, is indicated as a side 15c and side 15d, respectively. As shown in Fig. 4, the spiral spring 15 is configured (formed) so that, when the spiral spring 15 is in a free, non-assembled, shape and in a state of release, in comparison with clearances between the mutually opposing sides 15c, 15d at a first side, in a radial direction, and opposite to a second side relative to the center of the spiral spring 15 (i.e., on the left side in Fig. 4 and in the vicinity of the outer engagement end portion 15b), clearances of the wire rod W1 between the mutually opposing sides 15c, 15d on the opposite, the second side, in a radial direction (i.e., on the right side in Fig. 4) are reduced or eliminated in such a way that the opposing sides 15c, 15d make contact with each other. In other words, the spiral spring 15 is formed in an eccentric spiral in a non-assembled state. As shown in Fig. 5, the spiral spring 15 is configured so that the mutually opposing sides 15c, 15d of the wire rod W1 do not make contact with each other over the entire circumference at a time when the spiral spring 15 is assembled. Because the spiral spring 15 is configured in such a way that the mutually opposing sides of the wire rod W1 do not make contact with each other over the entire circumference, as long as the seatback frame 12 rotates within a range of a predetermined angle, frictional force is not generated between the mutually opposing sides 15c, 15d when the seatback frame 12 rotates within the predetermined angle.

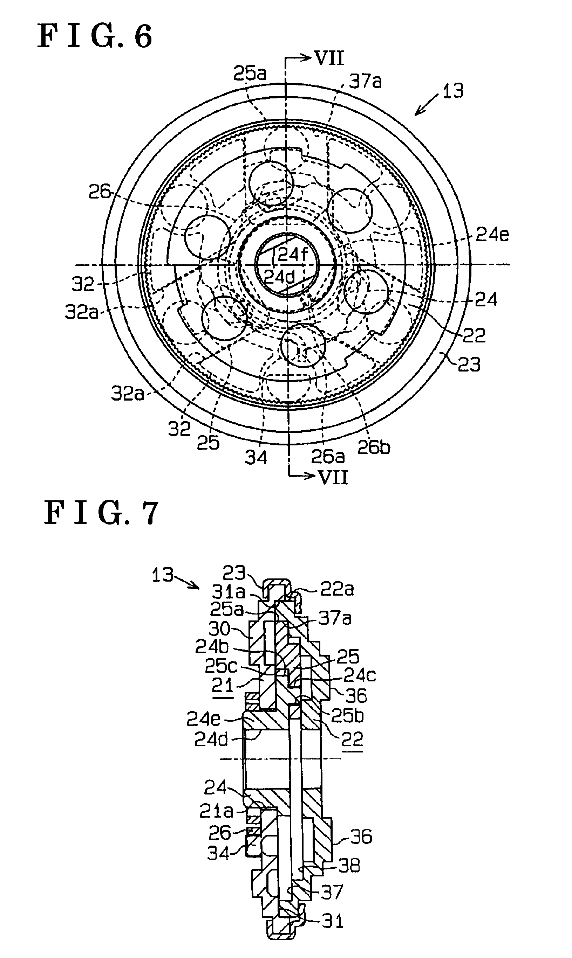

The construction of the lock mechanism 13 will next be explained with reference to Figs. 6-8. As shown in Figs. 6-8, the lock mechanism 13 includes a lower arm 21 serving as a first frame, an upper arm 22, a holder 23, a cam 24 serving as a second frame, plural (e.g., three) pawls 25, and a spiral spring 26.

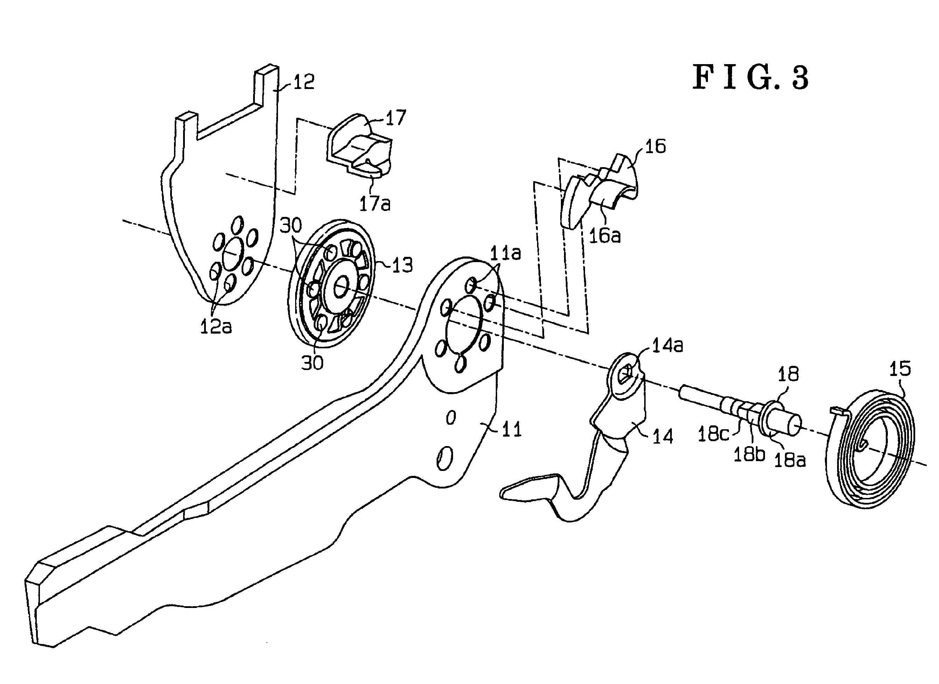

The lower arm 21 is formed by half die cutting (half blanking), and is configured into a ring shape having a shaft insertion bore 21a in the center thereof. Plural fitting convex portions 30 protruding at predetermined angles are formed on a first surface of the lower arm 21, a first surface which is arranged to face the seat cushion 11. Plural fitting bores 11a (shown in Fig. 3) are formed on the seat cushion frame 11, corresponding to each of the fitting convex portions 30. The lower arm 21 is welded to the seat cushion frame 11 by virtue of the fitting convex portions 30 being fitted into the fitting bores 11a. Accordingly, the lower arm 21 is to all intents and purposes formed integrally with the seat cushion frame 11.

A circular recess portion 31 is formed on a second surface of the lower arm 21, opposite the seat cushion frame 11. Plural convex portions 32 protruding from a bottom wall portion of the recess portion 31 are formed on the recess portion 31 at predetermined angles between each of the adjoining fitting convex portions 30. The convex portions 32 include lateral surfaces 32a, 32a which that extends flatly in a radial direction in such a way that the lateral surfaces 32a of each of the adjoining convex portions 32 are each arranged in parallel to one another. The lower arm 21 also includes a guide groove 33 that extends in a radial direction between the lateral surfaces 32a, 32a of adjoining convex portions 32, 32. The guide groove 33 guides the movement of the pawl 25.

An engagement projection 34 protruding in parallel to the shaft is formed, in the vicinity of the shaft insertion bore 21a, on the side of the lower arm 21 which faces the seat cushion frame 11. The engagement projection 34 is configured to be engaged with an outside engagement end portion 26a the spiral spring 26.

The upper arm 22 is formed by half die cutting (half blanking), and is formed in a ring shape having an external diameter approximately the same to an internal diameter of the recess portion 31 (i.e., inner peripheral surface 31a). Plural fitting convex portions 36 formed on a side (i.e., side opposite to the seat cushion frame 11) which faces the seatback frame 12 at predetermined angles. Plural fitting bores 12a (shown in Fig. 2) are formed on the seatback frame 12 corresponding to the fitting convex portions 36. The upper arm 22 is welded to the seatback frame 12, where the fitting convex portions 36 are fitted into the fitting bores 12a. Accordingly, the upper arm 22 is substantially integrally formed with the seatback frame 12.

The upper arm 22 is assembled in such a way that an outer peripheral surface 22a of the upper arm 22 slidably contacts the inner peripheral surface 31a relative to the lower arm 21. In other words, the upper arm 22 is pivotally supported by the lower arm 21. Thus, the seatback frame 12 is rotatably connected to the seat cushion frame 11 via the lower arm 21 and the upper arm 22 (i.e., the lock mechanism 13).

The upper arm 22 includes a first recess portion 37 circularly formed on the opposite side of the seatback frame 12 (i.e., lower arm 21 side), and being concentric with the seatback frame 12. Inner teeth 37a are formed on the inner peripheral surface of the first recess portion 37. Thus, when the upper arm 22 is assembled to the lower arm 21, the inner teeth 37a face the guide groove 33 in a radial direction.

A second recess portion 38 circularly formed having a smaller inner diameter than the inner diameter of the first recess portion 37, and being concentric with the first recess portion 37 is formed on the first recess portion 37. The first and the second recess portions 37, 38, and the recess portion 31 form an accommodation space for the cam 24 and the pawl 25.

The holder 23 is formed in a ring shape, and the holder 23 is attached onto external wall surfaces of the upper arm 22 and the lower arm 21 in a state where the upper arm 22 and the lower arm 21 are assembled. The lower arm 21 and the upper arm 22 are prevented from being pulled out at a state where the relative rotation between the lower arm 21 and the upper arm 22 are allowed by means of the holder 23.

The cam 24 includes plural (e.g., three) cam portions 24a extended from a rotational center at predetermined angles in a radial direction. A tip portion of each of the cam portions 24a serves as a cam surface 24b. Each of the cam portions 24a includes a projection 24c protruding in parallel to the shaft direction. The cam 24 further includes a boss portion 24e cylindrically protruding and surrounding a fitting bore 24d which penetrates into the central portion of the cam 24. The second fitting portion 18c of the rotational shaft 18 is fitted into the fitting bore 24d, and the cam 24 is connected to the rotational shaft 18 to be rotatable as one unit. The boss portion 24e of the cam 24 is inserted into the shaft insertion bore 21a so that the cam portion 24a is accommodated in a space formed between the lower arm 21 and the upper arm 22. Thus, the cam 24 is connected to the lower arm 21 to be rotatable relative to the lower arm. Accordingly, when the rotational shaft 18 rotates by virtue of the operation of the operation lever 14 , the cam 24 unitarily rotates in conjunction with the rotation of the rotational shaft 18.

An engagement groove 24f arranged in a radial direction is formed on the boss portion 24e. The engagement groove 24f is engaged with an inside engagement end portion 26b of the spiral spring 26. The pawl 25 is configured into a rectangular plate shape including a width slightly smaller than a width in a peripheral direction of the guide groove 33. Each pawl 25 is arranged at each of the guide groove 33, and movement of the pawl 25 in a radial direction is guided by virtue of a slidable contact between the pawl 25 and the lateral surfaces 32a of the convex portion 32. Outer teeth 25a configured to be geared with the inner teeth 37a of the upper arm 22 are formed on a tip portion of each of the pawls 25. A cam hole 25b penetrated in a thickness direction is formed on a base portion of each of the pawl 25. The cam hole 25b is configured to be inclined relative to the peripheral direction, and the pawl 25 is engaged with the cam 24 by inserting the projection 24c into the cam hole 25b.

Further, a stepped portion is formed on each of the pawl 25 between the outer teeth 25a and the cam hole 25b. A side facing the stepped portion in a radial direction serves as a pawl cam surface 25c. The pawl cam surface 25c is configured to intersect a lateral surface of the pawl 25 and to extend having a predetermined inclination angle. The pawl 25 is engaged with the cam 24 by virtue of the contact of the cam surface 24b to the pawl cam surface 25c.

In other words, when the cam 24 rotates in a first direction (i.e., clockwise in Fig. 4) at a state where the cam 24 and the pawl 25 are accommodated in the accommodation space between the lower arm 21 and the upper arm 22, the cam hole 25b of the pawl 25 is pushed by the projection 24c of the cam 24 in such a way that the pawl 25 is drawn inward towards the center in a radial direction along the guide groove 33. In these circumstances, the upper arm 22 becomes rotatable relative to the lower arm 21 because the geared connection between the outer teeth 25a of the pawl 25 and the inner teeth 37a of the upper arm 22 is disengaged. Thus, a rotation allowing state is set between the lower arm 21 and the upper arm 22.

On the other hand, when the cam 24 rotates in a second direction (i.e., counterclockwise in Fig. 4), the cam bore 25b of the pawl 25 is pushed by the projection 24c of the cam 24, and the pawl cam surface 25c is pushed by the cam surface 24b in such a way that the pawl 25 moves outwardly in a radial direction along the guide groove 33. In these circumstances, the upper arm 22 becomes immovable relative to the lower arm 21 because the outer teeth 25a of the pawl 25 is engaged with the inner teeth 37a of the upper arm 22. Thus, a rotation restriction state is set between the lower arm 21 and the upper arm 22.

In those circumstances, the rotation of the cam 24 relative to the lower arm 21 is allowed within a predetermined angle for switching the rotation restriction state and the rotation allowing state of the lower arm 21 one another relative to the upper arm 22.

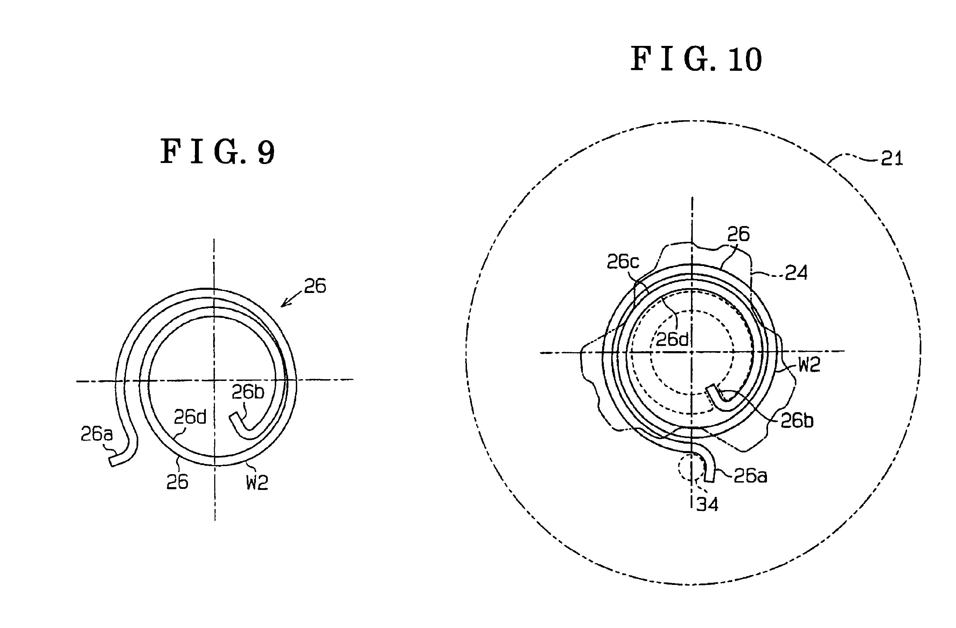

The spiral spring 26 is formed by spirally winding a wire rod W2 (shown in Figs. 9-10) having an approximately rectangular constantly formed cross section. The spiral spring 26 includes the outside engagement end portion 26a serving as a first end formed by bending a tip of the spiral spring 26 at an outer peripheral side, and the inside engagement end portion 26b serving as a second end formed by bending a tip of the spiral spring 26 at an inner peripheral side. The spiral spring 26 is assembled by engaging the outside engagement end portion 26a with the lower arm 21, and by engaging the inside engagement end portion 26b with the cam 24.

In other words, the spiral spring 26 is wound, counterclockwise in Figs. 9-10, from the inner peripheral side to the outer peripheral side, the outside engagement end portion 26a is engaged with the engagement projection 34, and the inside engagement end portion 26b is engaged with the engagement groove 24f. That is, the internal periphery side of the spiral spring 26 is engaged with the cam 24 at the inside engagement end portion 26b which is bent at a position deviating from the center. Thus, the spiral spring 26 biases the cam 24, counterclockwise in Figs. 9-10, relative to the lower arm 21, that is, towards the side for restricting the rotation of the upper arm 22 relative to the lower arm 21. In other words, the cam 24 maintains the rotation restriction state of the upper arm 22 relative to the lower arm 21, basically, and thus maintains the rotation restriction state of the seatback frame 12 relative to the seat cushion frame 11. When the cam 24 rotates, clockwise in Figs. 9-10, relative to the lower arm 21 against the biasing force of the spiral spring 26, the rotation restriction state of the upper arm 22 relative to the lower arm 21 is switched to the rotation allowing state.

The spiral spring 26 includes a side 26c at the outer peripheral side and a side 26d at an inner peripheral side of the wire rod W2. As shown in Fig. 9, the spiral spring 26 is formed so that, when the spiral spring 26 is in a free, non-assembled, shape and in a state of release, in comparison with clearances between the mutually opposing sides 26c, 26d at a first side (i.e., in the vicinity of the outside engagement end portion 26a and on the left side of Fig. 9), and opposite to a second side (i.e., on the right side of Fig. 9) relative to the center of the spiral spring 26, clearances between the mutually opposing sides 26c, 26d of the wire rod W2 at the second side are reduced, or eliminated in such a way that the opposing sides 26c, 26d make contact with each other. In other words, the spiral spring 26 is formed in an eccentric spiral shape when the spiral spring is not assembled. As shown in Fig. 10, the spiral spring 26 is configured so that the mutually opposing sides 26c, 26d of the wire rod W2 do not make contact with each other over the entire circumference when the spiral spring 26 is assembled. The spiral spring 26 is formed so that the mutually opposing sides 26c, 26d of the wire rod W2 do not make contact with each other over the entire circumference as long as the cam 24 rotates within the predetermined angle. Accordingly, the frictional force is not generated between the mutually opposing sides 26c, 26d when the cam 24 rotates within the predetermined angle.

According to the embodiment of the present invention, the following effects can be obtained.

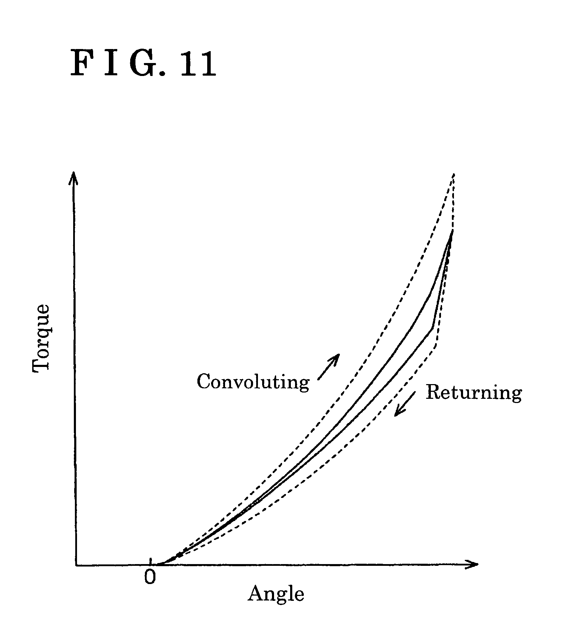

According to the embodiment of the present invention, the mutually opposing sides 26c, 26d of the wire rod W2 do not make contact with each other over the entire circumference. Thus, for example, when the operational force is transmitted to the cam 24 by virtue of the operational force of the operation lever 14 against the spiral spring 26 to achieve the rotation allowing state, the frictional force is not generated between the mutually opposing sides 26c, 26d of the spiral spring 26 over the entire rotational operation of the cam 24 relative to the lower arm 21. Likewise, when the rotation restriction state is achieved by biasing the cam 24 by means of the spiral spring 26 in conjunction with the release of the operational force, the frictional force is not generated between the sides 26c, 26d of the spiral spring 26 over the entire rotational operation of the cam 24 relative to the lower arm 21. Thus, as shown with a solid line in Fig. 11, overall hysteresis during the torque change in conjunction with the rotation of the cam 24 can be inhibited. In particular, the needs for the excessive operational force to be transmitted to the cam 24 via the operation lever 14, or the like, in order to achieve the rotation allowing state, and the inadequate holding force can be avoided to be caused. Thus, the operability of the operation lever 14 in order to achieve the rotation allowing state can be improved.

According to the embodiment of the present invention, the mutually opposing sides 15c, 15d of the wire rod W1 for forming the spiral spring 15 do not make contact with each other over the entire circumference when the seatback frame 12 rotates within the predetermined angle. Thus, the frictional force is not generated between the sides 15c, 15d of the spiral spring 15 over the entire rotational operation of the seatback frame 12 relative to the seat cushion frame 11. Accordingly, the overall hysteresis during the torque change in conjunction with the rotation of the seatback frame 12 can be inhibited.

According to the embodiment of the present invention, because the spiral spring 15 is formed in consideration of the elastic deformation of the spiral spring 15, when the seatback frame 12 rotates within the predetermined angle, for example, a cover, or the like, for covering the spiral spring 15, or the like, can be reduced in volume, and also the restriction regarding the design can be lessened. Likewise, because the spiral spring 26 is formed in consideration of the elastic deformation of the spiral spring 26, when the cam 24 rotates within the predetermined angle, freedom of the design and the freedom of the positioning of surrounding members can be improved.

According to the embodiment of the present invention, because the spiral springs 15, 26 are formed with the wire rods W1, W2 which have approximately rectangular constant cross-section, dead space for accommodating the spiral springs in accordance with the required elastic force can be reduced.

According to the embodiment of the present invention, the life longevity of the spiral spring 26 can be elongated by avoiding the abrasion because of the sliding contact between the sides 15c, 15d.

Constructions of the embodiment of the present invention may be changed as follows.

The cam 24 may be connected to the upper arm 22 to be rotatable within a predetermined angle. In this case, the outside engagement end portion 26a of the spiral spring 26 may be engaged with the upper arm 22.

A surface of the spiral spring 26 may be treated with, for example, bonderlube treatment (zinc phosphate coating) in order to reduce the frictional resistance between the spiral spring 26 and the lower arm 21 in conjunction with the elastic deformation.

A configuration of the cross section of the wire rods W1, W2 for forming the spiral springs 15, 26 may be varied, and, for example, may be configured to be circular. In this case, by adopting the multipurpose wire rods without applying special processes, the cost reduction can be achieved.

Even if the seat cushion frame 11 and the lower arm 21 are integrally formed as one unit, the construction is not departed from the scope of the present invention. Likewise, even if the seatback frame 12 and the upper arm 22 are integrally formed as one unit, the construction is not departed from the scope of the present invention.

An example of a construction of the lock mechanism 13 is described in the embodiment of the present invention. For example, the number of the cam portion 24a of the cam 24 and the number of the pawl 25 configured to be engaged with the cam portion 24a is not limited and may be varied. Further, configurations of the cam surface and the cam hole being engaged with the cam 24 and the pawl 25 may be changed.

The embodiment of the present invention is applicable to a rotational device including two frames (i.e., first and second frames) which are rotatably connected one another within a predetermined angle.

According to the embodiment of the present invention, mutually opposing sides of the wire rod for forming the spiral spring do not make contact with each other over the entire circumference when the second frame rotates within the predetermined angle. Thus, the frictional force is not generated between the mutually opposing sides of the spiral spring over the entire rotational operation of the second frame relative to the first frame. Accordingly, the overall hysteresis during the torque change in conjunction with the rotation of the second frame can be inhibited.

According to the embodiment of the present invention, the mutually opposing sides of the wire rod for forming the spiral spring do not make contact with each other over the entire circumference when the cam rotates within the predetermined angle. Thus, for example, when the operational force is transmitted to the cam by means of the operational portion against the spiral spring to achieve the rotation allowing state, the frictional force is not generated between the mutually opposing sides of the spiral spring over the entire rotational operation of the cam relative to one of the lower arm or the upper arm. Likewise, when the rotation restriction state is achieved by biasing the cam by means of the spiral spring in conjunction with the release of the operational force, the frictional force is not generated between the sides of the spiral spring over the entire rotational operation of the cam relative to either the lower arm or the upper arm. Thus, the overall hysteresis during the torque change in conjunction with the rotation of the cam can be inhibited. In particular, the excessive operation to be transmitted to the cam via the operational portion in order to achieve the rotation allowing state and the inadequate holding force for maintaining the rotation restriction state can be avoided.

According to the embodiment of the present invention, mutually opposing sides of the wire rod for forming the spiral spring do not make contact with each other over the entire circumference when the seatback frame rotates within the predetermined angle. Thus, the frictional force is not generated between the mutually opposing sides of the spiral spring over the entire rotational operation of the seatback frame relative to the seat cushion frame. Accordingly, the overall hysteresis during the torque change in conjunction with the rotation of the seatback frame can be inhibited.

The principles, preferred embodiment and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.
A rotation device includes a first frame (11, 21), a second frame (12, 24) connected to the first frame to be rotatable within a predetermined angle, and a spiral spring (15, 26) including a first end and a second end, the first end of the spiral spring being configured to be engaged with the first frame, the second end of the spiral spring being configured to be engaged with the second frame. The spiral spring is formed in such a way that mutually opposing sides of a wire rod (W1, W2) do not make contact with each other when the second frame rotates within the predetermined angle.

## Claims

1. A rotation device, comprising:
a first frame (11, 21);
a second frame (12, 24) connected to the first frame to be rotatable within a predetermined angle; and
a spiral spring (15, 26) including a first end and a second end, the first end of the spiral spring being configured to be engaged with the first frame, the second end of the spiral spring being configured to be engaged with the second frame; **characterized in that**
the spiral spring is formed in such a way that mutually opposing sides of a wire rod (W1, W2) do not make contact with each other when the second frame rotates within the predetermined angle.

2. The rotation device according to Claim 1, wherein the spiral spring is configured in order that clearances between the mutually opposing sides of the wire rod for forming the spiral spring at a first side in a radial direction are reduced or eliminated to make contact with each other, in comparison with clearances between the mutually opposing sides at a second side which is opposite to the first side relative to the center of the spiral spring, when the spiral spring is not assembled.

3. The rotation device according to Claim 1, wherein a surface of the spiral spring is treated with bonderlube.

4. The rotation device according to Claim 1, wherein a surface of the spiral spring is treated with molybdenum coating.

5. A seat reclining device for a vehicle, comprising:
a lower arm (21) fixed to a seat cushion frame;
an upper arm (22) fixed to a seatback frame relatively rotatably connected to the lower arm; a cam (24) connected to either one of the lower arm or the upper arm to be rotatable within a predetermined angle, the cam for switching a rotation restriction state and a rotation allowing state of the upper arm relative to the lower arm;
a spiral spring (26) having a first end and a second end, either the first end or the second end of the spiral spring being engaged with either the lower arm or the upper arm, the second end of the spiral spring being engaged with the cam, for biasing the cam to achieve the rotation restriction state; and
an operation portion (14) connected to the cam to be integrally rotatable for transmitting operational force to the cam to achieve the rotation allowing state; **characterized in that**
the spiral spring is formed in such a way that mutually opposing sides of a wire rod (W2) do not make contact with each other when the cam rotates within the predetermined angle.

6. The seat reclining device for the vehicle according to Claim 5, wherein the spiral spring is configured in order that clearances between the mutually opposing sides of the wire rod for forming the spiral spring at a first side in a radial direction are reduced or eliminated to make contact with each other, in comparison with clearances between the mutually opposing sides at a second side which is opposite to the first side relative to the center of the spiral spring, when the spiral spring is not assembled.

7. The seat reclining device for the vehicle according to Claim 5, wherein a surface of the spiral spring is treated with bonderlube.

8. The seat reclining device for the vehicle according to Claim 5, wherein a surface of the spiral spring is treated with molybdenum coating.

9. A seat reclining device for a vehicle, comprising:
a seat cushion frame (11);
a seatback frame (12) connected to the seat cushion frame to be rotatable within a predetermined angle; and
a spiral spring (15) including a first end and a second end, the first end of the spiral spring being engaged with the seat cushion frame, the second end of the spiral spring being engaged with the seatback frame; **characterized in that**
the spiral spring is formed in such a way that mutually opposing sides of a wire rod (W1) do not make contact with each other when the seatback frame rotates within the predetermined angle.

10. The seat reclining device for the vehicle according to Claim 9, wherein the spiral spring is configured in order that clearances between the mutually opposing sides of the wire rod for forming the spiral spring at a first side in a radial direction are reduced or eliminated to make contact with each other, in comparison with clearances between the mutually opposing sides at a second side which is opposite to the first side relative to the center of the spiral spring, when the spiral spring is not assembled.

11. The seat reclining device for the vehicle according to Claim 9, wherein a surface of the spiral spring is treated with bonderlube.

12. The seat reclining device for the vehicle according to Claim 9, wherein a surface of the spiral spring is treated with molybdenum coating.
